(19) Europäisches Patentamt
European Patent Office
Office européen des brevets

(11) **EP 3 387 494 B1**

(12) **FASCICULE DE BREVET EUROPEEN**

(45) Date de publication et mention
de la délivrance du brevet:
**30.10.2019 Bulletin 2019/44**

(51) Int Cl.:
***G04C 10/02*** *(2006.01)*

(21) Numéro de dépôt: **16763064.9**

(86) Numéro de dépôt international:
**PCT/EP2016/071365**

(22) Date de dépôt: **09.09.2016**

(87) Numéro de publication internationale:
**WO 2017/097449 (15.06.2017 Gazette 2017/24)**

(54) **OBJET PORTABLE TEL QU'UNE MONTRE OU UN INSTRUMENT DE MESURE AVEC DES AIGUILLES SOLAIRES**

TRAGBARER GEGENSTAND WIE ARMBANDUHR ODER MESSINSTRUMENT MIT SOLARZEIGERN

PORTABLE OBJECT SUCH AS A WATCH OR A MEASUREMENT INSTRUMENT WITH SOLAR HANDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2015 EP 15199649**

(43) Date de publication de la demande:
**17.10.2018 Bulletin 2018/42**

(73) Titulaire: **The Swatch Group Research and Development Ltd**
**2074 Marin (CH)**

(72) Inventeur: **TORTORA, Pierpasquale**
**2000 Neuchâtel (CH)**

(74) Mandataire: **ICB SA**
**Faubourg de l'Hôpital, 3**
**2001 Neuchâtel (CH)**

(56) Documents cités:
**EP-A1- 0 872 783    EP-A1- 2 950 168**
**FR-A1- 2 664 994    FR-A1- 3 007 200**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 387 494 B1

**Description**

**Description**

Domaine de l'invention

L'invention se rapporte à une aiguille d'affichage solaire pour un objet portable. La présente invention concerne en particulier un jeu d'aiguilles d'affichage solaire pour une pièce d'horlogerie telle qu'une montre-bracelet ou un appareil de mesure à affichage analogique.

Arrière-plan de l'invention

De manière connue, des pièces d'horlogerie sont équipées d'un cadran formé d'une cellule solaire comprenant un substrat, au moins une pluralité de couches superposées définissant au moins un élément n-i-p ou p-i-n et une couche conductrice formant une première électrode destinée à être exposée au rayonnement lumineux pour pouvoir alimenter un circuit horométrique ou un circuit électrique d'une pièce d'horlogerie telle qu'une montre.

Le document EP 0 872 783 décrit un cadran formé d'une cellule solaire pour une pièce d'horlogerie. Un tel cadran présente un aspect esthétique discutable et des performances électriques moyennes. En effet, un cadran formé d'une cellule solaire doit être translucide de manière que la cellule soit moins visible et ne peut pas recevoir toute sorte de finitions ou de couleurs spécifiques.

On connait également du document FR 2 664 994 une horloge économe en énergie, comprenant un panneau solaire sur la surface supérieure d'une aiguille de ladite horloge.

Résumé de l'invention

L'invention a notamment pour objectif de pallier les différents inconvénients de ces techniques connues.

Plus précisément, un objectif de l'invention est de fournir une aiguille d'affichage formée d'une cellule solaire pour pouvoir s'affranchir des cadrans solaires.

Ces objectifs, ainsi que d'autres qui apparaîtront plus clairement par la suite, sont atteints selon l'invention à l'aide d'un objet portable dans lequel est logée une source d'alimentation en énergie électrique rechargeable, comprenant au moins une première aiguille d'affichage et une seconde aiguille d'affichage.

Selon l'invention, que ladite première aiguille d'affichage et ladite seconde aiguille d'affichage, sont formées d'au moins une cellule solaire, la source d'alimentation en énergie électrique étant reliée aux aiguilles d'affichage pour être rechargée.

Conformément à un mode de réalisation préférentiel de l'invention, la cellule solaire est une cellule à hétérojonction.

Selon une caractéristique avantageuse de l'invention, la première et la seconde aiguille d'affichage sont superposées et munies chacune d'un trou pour le passage d'un axe d'entraînement, l'axe d'entraînement de la seconde aiguille d'affichage étant disposé concentriquement à l'intérieur de l'axe d'entraînement de la première aiguille d'affichage avec interposition d'une couche isolante entre les deux axes d'entraînement, chacune des première et seconde aiguilles d'affichage comprenant un premier et un second pôle, le premier pôle de la première aiguille d'affichage étant relié électriquement à une première borne de la source d'alimentation via l'axe d'entraînement de la première aiguille d'affichage, le second pôle de la première aiguille d'affichage étant relié au premier pôle de la deuxième aiguille d'affichage via une pièce de contact qui assure la continuité électrique entre la première et la seconde aiguille d'affichage, et le second pôle de la seconde aiguille d'affichage étant relié à la seconde borne de la source d'alimentation via l'axe d'entraînement de la seconde aiguille d'affichage.

Selon une autre caractéristique préférée, la pièce de contact est centrée sur l'axe d'entraînement.

Avantageusement, chacune des première et seconde aiguilles d'affichage comprend une premier, respectivement un second élément annulaire présentant chacun en leur centre un trou pour le passage de l'axe d'entraînement de la première, respectivement la seconde aiguille d'affichage, les premier et second éléments annulaires étant chacun doté d'une portion de surface supérieure dirigée du côté d'un observateur, et d'une portion de surface inférieure opposée à la portion de surface supérieure, les premier et second éléments annulaires étant formée d'un matériau électriquement conducteur.

Le premier et le second élément annulaire supportent chacun la première et la seconde aiguille d'affichage.

L'invention concerne également un objet portable conforme à l'invention sous la forme d'une pièce d'horlogerie.

Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :

- les figures 1 et 2 sont des vues de dessus et dessous d'un jeu d'aiguilles comprenant une cellules solaire équipant un objet portable conforme à l'invention ;

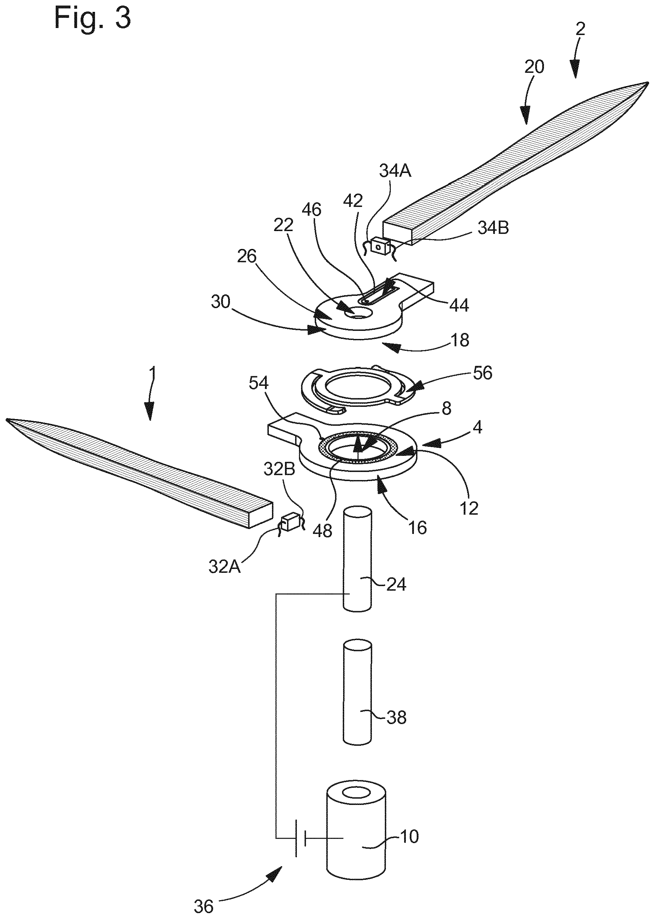

- les figures 3 et 4 sont des vues éclatées d'un jeu d'aiguilles comprenant une cellule solaire équipant un objet portable conforme à l'invention.

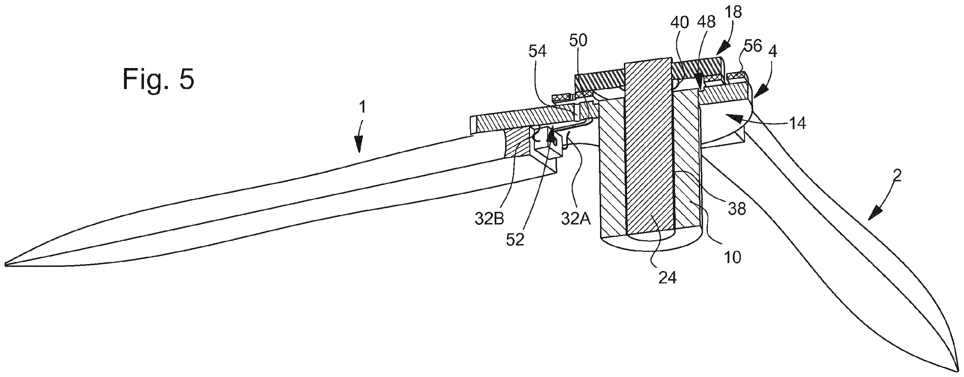

- La figure 5 est une vue en coupe d'un jeu d'aiguilles comprenant une cellule solaire équipant un objet portable conforme à l'invention.

Description détaillée des modes de réalisation préférés

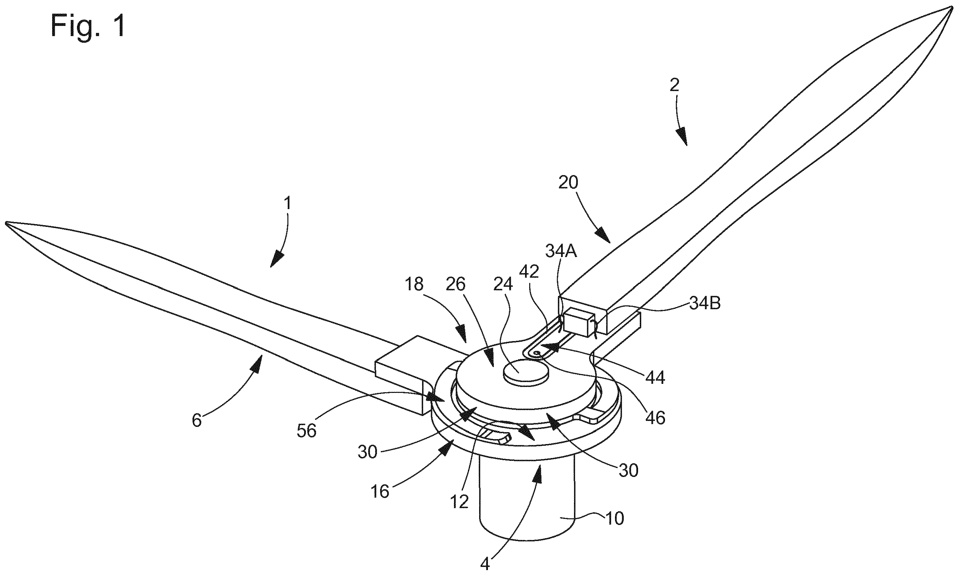

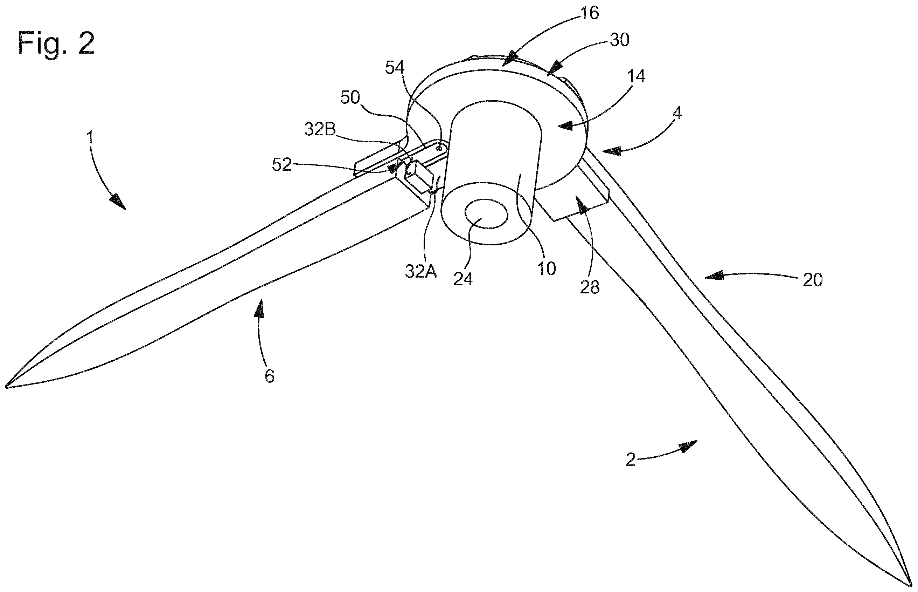

Un objet portable selon un mode de réalisation particulier va maintenant être décrit dans ce qui suit faisant référence conjointement aux figures 1 et 2.

L'invention concerne un objet portable comprenant une aiguille d'affichage 1 fournissant une indication au moyen de l'aiguille d'affichage 1, et dans lequel est logé une source d'alimentation 36 en énergie électrique.

Selon l'invention, l'aiguille d'affichage 1 est formée d'au moins une cellule solaire, la source d'alimentation 36 en énergie électrique étant reliée à l'aiguille d'affichage 1 pour être rechargée.

Bien que l'homme du métier puisse penser qu'un jeu d'aiguilles 1, 2 solaires ne puisse pas suffire comme source d'énergie comparé à un cadran, l'inventeur a démontré qu'un jeu d'aguilles solaires pouvait fournir une source d'énergie comparable.

En admettant qu'à la surface de la montre on ait une luminance L, la puissance produite par la montre à cadran solaire est donnée par l'équation suivante :

$$P_C = L \times S_C \times T_C \times E_C \times T_G \qquad (1)$$

Où $S_C$ est la surface du cadran, $T_C$ la transmission, $E_C$ l'efficacité de la cellule solaire et $T_G$ la transmission de la glace.

Typiquement, on observe les valeurs suivantes pour l'équation (1) :

$$S_C = 8 \times 10^{-4} m^2 \, ; \, T_C = 0.35 \, ; \, E_C = 0.04$$

En intégrant ces valeurs dans l'équation (1), on obtient :

$$P_C = L \times T_G \times 1.12 \times 10^{-5} \, W \qquad (2)$$

Pour un appareil portable, tel qu'une montre, avec des aiguilles solaires, la puissance produite est donnée par l'équation suivante :

$$P_A = L \times S_A \times E_A \times T_G \qquad (3)$$

Où $S_A$ est la surface de deux aiguilles, et $E_A$ l'efficacité de la cellule solaire des aiguilles.

Pour un jeu d'aiguilles heure-minute la surface $S_A = 4.4 \times 10^{-5} m^2$.

Selon un mode de réalisation préférentiel de l'invention, la cellule solaire formant l'aiguille d'affichage 1 est une cellule à hétérojonction.

Les cellules solaires à hétérojonction sont obtenues par la mise en contact de matériaux d'énergie de gap différente. Par exemple, l'hétérojonction silicium consiste à mettre en contact le silicium amorphe hydrogéné (a-Si:H) avec le silicium cristallin (c-Si), l'énergie de gap du a-Si:H étant plus élevée que celle du c-Si. La conductivité du a-Si:H étant très inférieure à celle du c-Si, il faut ajouter une couche conductrice sur toute sa surface afin de pouvoir collecter le courant. Sur la face illuminée de la cellule, cette couche conductrice est généralement constituée d'un oxyde transparent conducteur (OTC) qui collecte le courant. Cet OTC assure également un bon contact avec les électrodes métalliques, tout en jouant le rôle de couche antireflet.

Les cellules à hétérojonction actuellement disponibles présentent une efficacité $E_A = 0.22$. L'épaisseur d'une telle cellule est de 150 $\mu m$, ce qui est comparable à l'épaisseur des aiguilles traditionnellement utilisées dans les objets portables tels que les montres.

En intégrant les valeurs précédentes dans l'équation (3), on obtient :

$$P_A = L \times T_G \times 0.97 \times 10^{-5} \, W \qquad (4)$$

La luminance et la transmission de la glace étant les mêmes pour les deux cas, la puissance obtenue dans les équations (2) et (4) est tout à fait comparable dans les deux cas.

Ainsi, la solution des aiguilles solaires présente pour avantage de pouvoir s'affranchir des restrictions quant aux décorations du cadran pour un montre par exemple, le cadran pouvant être réalisé dans la matière, la couleur et la finition souhaitée.

Les aiguilles solaires peuvent être réalisées au moyen d'un procédé connu et décrit dans le brevet EP 0 948 060 au nom d'Asulab SA. Ce brevet décrit la fabrication d'une cellule photovoltaïque circulaire formant un cadran pour une pièce d'horlogerie telle qu'une montre. Cependant, dans ce brevet l'invention n'est pas limitée aux cadrans, et peut être utilisée dans le cadre de la fabrication de cellules photovoltaïques de toute autre forme, notamment la fabrication d'aiguilles solaires.

De manière à acheminer l'énergie collectée par les aiguilles solaires, un structure particulière doit être prévue pour que l'un des pôles de l'une des aiguilles solaires soit relié à l'un des pôles de l'autre aiguille solaire grâce au contact électrique entre les deux aiguilles, ce qui permet d'utiliser les axes d'entraînement des deux aiguilles pour la connexion électrique des aiguilles solaires aux bornes de la source d'alimentation. Une telle structure est décrite par la demanderesse dans la demande de brevet européen No. 14170094.8. Dans la description qui suit, la structure de cette demande de brevet a été adaptée pour convenir à l'utilisation d'aiguilles solaires.

Dans l'exemple représenté aux figures 1 et 2, l'objet portable équipéd'un jeu d'aiguilles selon l'invention comprend une première et une seconde aiguille d'affichage, respectivement 1 et 2. La première aiguille d'affichage 1 est formée d'un premier élément annulaire 4 prolongé par une partie 6 pouvant être formée par au moins une cellule solaire et qui s'étend sensiblement rectilignement. Le premier élément annulaire 4 présente en son centre un trou 8 pour le passage d'un axe d'entraînement 10 de la première aiguille d'affichage 1. Le premier élément annulaire 4 est doté d'une portion de surface supérieure 12 dirigée du côté d'un observateur, et d'une portion de surface inférieure 14 opposée à la portion de surface supérieure 12. Les portions de surface supérieure 12 et inférieure 14 du premier élément annulaire 4 sont reliées entre elles tout le long de leur périmètre par une surface latérale 16. Selon une caractéristique de l'invention qui sera décrite plus en détail ci-après, le premier élément annulaire 4 est revêtu d'une couche d'un matériau électriquement conducteur sur ses portions de surface supérieure 12 et inférieure 14 ainsi que dans le trou 8 dans lequel est engagé l'axe d'entraînement 10.

De manière analogue à la première aiguille d'affichage 1, la seconde aiguille d'affichage 2 est formée d'un second élément annulaire 18 prolongé par une partie 20 pouvant être formée par au moins une cellule solaire et qui s'étend sensiblement rectilignement. Le second élément annulaire 18 de la seconde aiguille d'affichage 2 présente en son centre un trou 22 pour le passage d'un axe d'entraînement 24 disposé concentriquement à l'intérieur de l'axe d'entraînement 10 de la première aiguille d'affichage 1. Le second élément annulaire 18 est doté d'une portion de surface supérieure 26 dirigée du côté d'un observateur, et d'une portion de surface inférieure 28 opposée à la portion de surface supérieure 26. Les portions de surface supérieure 26 et inférieure 28 du second élément annulaire 18 sont reliées entre elles tout le long de leur périmètre par une surface latérale 30. Selon une caractéristique de l'invention qui sera décrite plus en détail ci-après, le second élément annulaire 18 est également revêtu d'une couche d'un matériau électriquement conducteur sur ses portions de surface supérieure 26 et inférieure 28 ainsi que dans le trou 22 dans lequel est engagé l'axe d'entraînement 24.

Les première et seconde aiguilles 1 et 2 comprennent des premier et second pôles, respectivement 32A, 32B et 34A, 34B, pour leur connexion électrique à une source d'alimentation 36 en énergie électrique logée à l'intérieur d'un bâti par exemple d'une montre-bracelet équipée du jeu d'aiguilles d'affichage 1, 2. La source d'alimentation 36 en énergie électrique est par exemple une batterie rechargeable.

Le premier pôle 32A de la première source de lumière 32 est relié à la source d'alimentation 36 via l'axe d'entraînement 10 de la première aiguille 1, et le second pôle 32B de la première source de lumière 32 est relié au premier pôle 34A de la seconde source de lumière 34 selon des modalités qui seront décrites en détail ci-dessous. Quant au second pôle 34B de la seconde source de lumière 34, il est relié à la source d'alimentation 36 via l'axe d'entraînement 24 de la seconde aiguille d'affichage 2. A cet effet, les axes d'entraînement 10 et 24 des première et seconde aiguilles d'affichage 1 et 2 doivent être conducteurs de l'électricité et doivent être isolés électriquement l'un par rapport à l'autre par interposition d'une couche isolante 38.

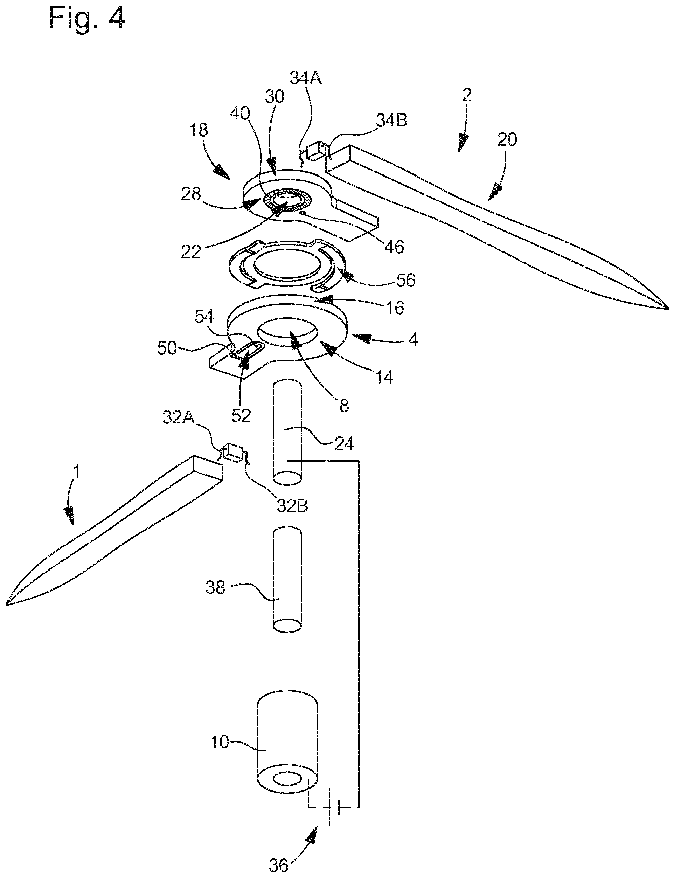

Comme mentionné ci-dessus, les premier et second éléments annulaires 4 et 18 sont revêtus sur leurs portions de surface supérieure et inférieure d'une couche d'un matériau électriquement conducteur. Plus précisément, l'axe d'entraînement 24 est chassé dans un trou 22 métallisé ménagé dans le second élément annulaire 18. Par conséquent, la portion de surface supérieure 26 du second élément annulaire 18 est portée au même potentiel électrique que l'axe d'entraînement 24. Par contre (voir figure 4), une tranchée continue 40 ménagée dans la portion de surface inférieure 28 du second élément annulaire 18 et rendue électriquement isolante par enlèvement local du matériau électriquement conducteur entoure l'axe d'entraînement 24, de façon que la portion de surface inférieure 28 soit électriquement isolée de l'axe d'entraînement 24. De même, une tranchée continue 42 qui se referme sur elle-même et qui est rendue isolante de la même façon que la tranchée continue 40 est ménagée dans la portion de surface supérieure 26 du second élément annulaire 18, de manière à créer un îlot 44 électriquement isolé du reste de la portion de surface supérieure 26. Un trou traversant 46 métallisé percé dans l'épaisseur du second élément annulaire 18 permet de relier électriquement entre eux l'îlot 44 ménagé dans la portion de surface supérieure 26 et la portion de surface inférieure 28.

De manière analogue, l'axe d'entraînement 10 est chassé dans un trou 8 métallisé ménagé dans le premier élément annulaire 4. Par conséquent, la portion de surface inférieure 14 du premier élément annulaire 4 est portée au même potentiel électrique que l'axe d'entraînement 10.. Par contre, une tranchée continue 48 ménagée dans la portion de surface supérieure 12 du premier élément annulaire 4 et rendue électriquement isolante par enlèvement local du matériau électriquement conducteur entoure l'axe d'entraînement 10, de façon que la portion de surface supérieure 12 soit électriquement isolée de l'axe d'entraînement 10. De même, une tranchée continue 50 qui se referme sur elle-même et qui est rendue isolante de la même façon que la tranchée continue 48 est ménagée dans la portion de surface inférieure 14 du premier élément annulaire 4, de manière à créer un îlot 52 électriquement isolé du reste de la portion de surface inférieure 14. Un trou traversant 54 métallisé percé dans l'épaisseur du premier élément annulaire 4 permet de relier électriquement entre eux l'îlot 52 ménagé dans la portion de surface inférieure 14 et la portion de surface supérieure 12.

Enfin, la portion de surface inférieure 28 du second élément annulaire 18 est mise en contact avec la portion de surface supérieure 12 du premier élément annulaire 4 via une pièce de contact 56 électriquement conductrice et mécaniquement élastique disposée entre les première et seconde aiguilles d'affichage 1 et 2 et centrée sur l'axe d'entraînement 10. L'îlot 44 ménagé dans la portion de surface supérieure 26 est donc relié électriquement à la portion de surface supérieure 12 du premier élément annulaire 4, cette portion de surface supérieure 12 étant elle-même électriquement reliée à l'îlot 52 ménagé dans la portion de surface inférieure 14 du premier élément annulaire 4.

Conformément à l'invention, le premier pôle 32A est relié électriquement à une première borne de la source d'alimentation 36 via l'axe d'entraînement 10 de la première aiguille d'affichage 1. A cet effet, le premier pôle 32A est relié, par exemple par une technique de câblage par fil bien connue sous sa terminologie anglo-saxonne de « wire bonding », à la portion de surface inférieure 14 du premier élément annulaire 4. Quant au second pôle 32B, il est relié au premier pôle 34A via la pièce de contact 56 qui assure la continuité électrique entre la première et la seconde aiguille d'affichage 1, 2. Pour cela, le second pôle 32B est relié à l'îlot 52 ménagé dans la portion de surface inférieure 14 du premier élément annulaire 4. Par l'intermédiaire du trou traversant métallisé 54 percé dans l'épaisseur du premier élément annulaire 4, l'îlot 52 est relié électriquement à la portion de surface supérieure 12 du premier élément annulaire 4, cette portion de surface supérieure 12 étant elle-même reliée grâce à la pièce de contact 56 à la portion de surface inférieure 28 du second élément annulaire 18. La portion de surface inférieure 28 du second élément annulaire 18 est elle-même reliée à l'îlot 44 ménagé dans la portion de surface supérieure 26 du second élément annulaire 18 par l'intermédiaire du via métallisé 46. Finalement, le premier pôle 34A est électriquement connecté à l'îlot 44 ménagé dans la portion de surface supérieure 26 du second élément annulaire 18. Quant au second pôle 34B, il est relié à la seconde borne de la source d'alimentation 36 via l'axe d'entraînement 24. Pour cela, le second pôle 34B est connecté électriquement à la portion de surface supérieure 26 du second élément annulaire 18.

Bien entendu, la présente invention ne se limite pas à l'exemple illustré et est susceptible de diverses variantes et modifications qui apparaîtront à l'homme de l'art.

NOMENCLATURE

1. Première aiguille d'affichage,
2. Seconde aiguille d'affichage,
4. Elément annulaire,
6. Partie qui s'étend sensiblement rectilignement,
8. Trou,
10. Axe d'entraînement,
12. Portion de surface supérieure,
14. Portion de surface inférieure,
16. Surface latérale,
18. Elément annulaire,
20. Partie qui s'étend sensiblement rectilignement,

22. Trou,
24. Axe d'entraînement,
26. Portion de surface supérieure,
28. Portion de surface inférieure,
30. Surface latérale,
32A, 32B. Premier et second pôles,
24A, 34B. Premier et second pôles,
36. Source d'alimentation en énergie électrique,
38. Couche isolante,
56. Pièce de contact.

**Revendications**

1. Objet portable dans lequel est logée une source d'alimentation (36) en énergie électrique rechargeable, comprenant au moins une première aiguille d'affichage et une seconde aiguille d'affichage (1, 2), **caractérisée en ce que** ladite première aiguille d'affichage et ladite seconde aiguille d'affichage (1, 2), sont formées d'au moins une cellule solaire, la source d'alimentation (36) en énergie électrique étant reliée aux aiguilles d'affichage pour être rechargée.

2. Objet portable selon la revendication 1, dans lequel la cellule solaire est une cellule à hétérojonction.

3. Objet portable selon la revendication 1 ou 2, dans lequel la première et la seconde aiguille d'affichage (1, 2) sont superposées et munies chacune d'un trou (8, 22) pour le passage d'un axe d'entraînement (10, 24), l'axe d'entraînement (24) de la seconde aiguille d'affichage (2) étant disposé concentriquement à l'intérieur de l'axe d'entraînement (10) de la première aiguille d'affichage (1) avec interposition d'une couche isolante (38) entre les deux axes d'entraînement (10, 24), chacune des première et seconde aiguilles d'affichage (1, 2) comprenant un premier et un second pôle (32A, 32B ; 34A, 34B), le premier pôle (32A) de la première aiguille d'affichage (1) étant relié électriquement à une première borne de la source d'alimentation (36) via l'axe d'entraînement (10) de la première aiguille d'affichage (1), le second pôle (32B) de la première aiguille d'affichage (1) étant relié au premier pôle (34A) de la deuxième aiguille d'affichage (2) via une pièce de contact (56) qui assure la continuité électrique entre la première et la seconde aiguille d'affichage (1, 2), et le second pôle (34B) de la seconde aiguille d'affichage (2) étant relié à la seconde borne de la source d'alimentation (36) via l'axe d'entraînement (24) de la seconde aiguille d'affichage (2).

4. Objet portable selon la revendication 3, dans lequel la pièce de contact (56) est centrée sur l'axe d'entraînement (10).

5. Objet portable selon l'une des revendications 1 à 4, dans lequel chacune des première et seconde aiguilles d'affichage (1, 2) comprend un premier, respectivement un second élément annulaire (4, 18) présentant chacun en leur centre un trou (8, 22) pour le passage de l'axe d'entraînement (10, 24) de la première, respectivement la seconde aiguille d'affichage (1, 2), les premier et second éléments annulaires (4 ;18) étant chacun doté d'une portion de surface supérieure (12 ; 26) dirigée du côté d'un observateur, et d'une portion de surface inférieure (14 ; 28) opposée à la portion de surface supérieure (12 ; 26), les premier et second éléments annulaires (4, 18) étant formée d'un matériau électriquement conducteur.

6. Objet portable selon la revendication 5, dans lequel le premier et le second élément annulaire (4, 18) supportent chacun la première et la seconde aiguille d'affichage (1, 2).

7. Objet portable selon les revendications 1 à 6, **caractérisé en ce que** l'objet portable est une pièce d'horlogerie.

**Patentansprüche**

1. Tragbarer Gegenstand, in dem eine wiederaufladbare elektrische Energieversorgungsquelle (36) untergebracht ist, umfassend mindestens einen ersten Anzeigezeiger und einen zweiten Anzeigezeiger (1, 2), **dadurch gekennzeichnet, dass** der erste Anzeigezeiger und der zweite Anzeigezeiger (1, 2) aus mindestens einer Solarzelle gebildet sind, wobei die elektrische Energieversorgungsquelle (36) zum Aufladen mit den Anzeigezeigern verbunden ist.

**2.** Tragbarer Gegenstand nach Anspruch 1, wobei die Solarzelle eine Heteroübergangszelle ist.

**3.** Tragbarer Gegenstand nach Anspruch 1 oder 2, wobei der erste und der zweite Anzeigezeiger (1, 2) übereinander angeordnet sind und jeweils mit einem Loch (8, 22) für den Durchgang einer Antriebsachse (10, 24) versehen sind, wobei die Antriebsachse (24) des zweiten Anzeigezeigers (2) konzentrisch innerhalb der Antriebsachse (10) des ersten Anzeigezeigers (1) angeordnet ist mit einer zwischen den beiden Antriebsachsen (10, 24) eingefügten Isolierschicht (38), wobei sowohl der erste als auch der zweite Anzeigezeiger (1, 2) einen ersten und einen zweiten Pol (32A, 32B; 34A, 34B) aufweist, der erste Pol (32A) des ersten Anzeigezeigers (1) mit einem ersten Anschluss der Versorgungsquelle (36) über die Antriebsachse (10) des ersten Anzeigezeigers (1) elektrisch verbunden ist, der zweite Pol (32B) des ersten Anzeigezeigers (1) mit dem ersten Pol (34A) des zweiten Anzeigezeigers (2) über ein Kontaktstück (56) verbunden ist, das die elektrische Verbindung zwischen dem ersten und dem zweiten Anzeigezeiger (1, 2) gewährleistet, und der zweite Pol (34B) des zweiten Anzeigezeigers (2) mit dem zweiten Anschluss der Versorgungsquelle (36) über die Antriebsachse (24) des zweiten Anzeigezeigers (2) verbunden ist.

**4.** Tragbarer Gegenstand nach Anspruch 3, wobei das Kontaktstück (56) auf die Antriebsachse (10) zentriert ist.

**5.** Tragbarer Gegenstand nach einem der Ansprüche 1 bis 4, wobei der erste und der zweite Anzeigezeiger (1, 2) ein erstes bzw. ein zweites ringförmiges Element (4, 18) umfassen, das jeweils in seinem Zentrum ein Loch (8, 22) für den Durchgang der Antriebsachse (10, 24) des ersten bzw. des zweiten Anzeigezeigers (1, 2) aufweist, wobei das erste und das zweite ringförmige Element (4; 18) jeweils mit einem oberen Flächenabschnitt (12; 26) versehen ist, der zur dem Betrachter zugewandten Seite gerichtet ist und mit einem unteren Flächenabschnitt (14; 28) versehen ist, der dem oberen Flächenabschnitt (12; 26) gegenüberliegt, wobei das erste und das zweite ringförmige Element (4, 18) aus einem elektrisch leitenden Material gebildet sind.

**6.** Tragbarer Gegenstand nach Anspruch 5, wobei das erste und das zweite ringförmige Element (4, 18) jeweils den ersten und den zweiten Anzeigezeiger (1, 2) tragen.

**7.** Tragbarer Gegenstand nach den Ansprüchen 1 bis 6, **dadurch gekennzeichnet, dass** der tragbare Gegenstand eine Uhr ist.

**Claims**

**1.** Portable object inside which is housed a rechargeable electrical energy source (36), comprising at least a first display hand and a second display hand (1,2),
**characterized in that** said first display hand (1) and said second display hand (2) are formed of at least one solar cell, the electrical energy source (36) being connected to the display hands for recharging.

**2.** Portable object according to claim 1, wherein the solar cell is a heterojunction cell.

**3.** Portable object according to claim 1 or 2, wherein the first and the second display hands (1, 2) are superposed and each provided with a hole (8, 22) for the passage of a drive arbor (10, 24), the drive arbor (24) of the second display hand (2) being arranged concentrically inside the drive arbor (10) of the first display hand (1), with the insertion of an insulating layer (38) between the two drive arbors (10, 24), each of the the first and second display hands (1, 2) having a first and a second pole (32A, 32B; 34A, 34B), the first pole (32A) of the first display hand (1) being electrically connected to a first terminal of the energy source (36) via the drive arbor (10) of the first display hand (1), the second pole (32B) of the first display hand (1) being connected to the first pole (34A) of the second display hand (2) via a contact piece (56) which ensures electrical continuity between the first and second display hands (1, 2), and the second pole (34B) of the second display hand (2) being connected to the second terminal of the energy source (36) via the drive arbor (24) of the second display hand (2).

**4.** Portable object according to claim 3, wherein the contact piece (56) is centred on the drive arbor (10).

**5.** Portable object according to any of claims 1 to 4, wherein each of the first and second display hands (1, 29) includes a first, respectively a second, annular element (4, 18) each having a hole (8, 22) at their centre for the passage of the drive arbor (10, 24) of the first, respectively of the second, display hand (1, 2), the first and second annular elements (4; 18) each being provided with an upper surface portion (12; 26) directed towards an observer, and with a lower surface portion (14; 28) opposite to the upper surface portion (12; 26), the first and second annular elements (4, 18) being formed of an electrically conductive material.

6. Portable object according to claim 5, wherein the first and second annular elements (4, 18) each carry the first and the second display hand (1, 2).

7. Timepiece including at least one hand according to any of the preceding claims.

Fig. 1

Fig. 2

EP 3 387 494 B1

Fig. 3

EP 3 387 494 B1

# Fig. 4

Fig. 5

EP 3 387 494 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0872783 A
- FR 2664994
- EP 0948060 A
- EP 14170094